Europäisches Patentamt

European Patent Office

Office européen des brevets

(11) Publication number: **0 414 538 A2**

# EUROPEAN PATENT APPLICATION

(21) Application number: **90309244.3**

(22) Date of filing: **23.08.90**

(51) Int. Cl.⁵: **G09F 3/02, G09F 3/10**

(30) Priority: **24.08.89 GB 8919270**

(43) Date of publication of application:
**27.02.91 Bulletin 91/09**

(84) Designated Contracting States:
**CH DE DK ES FR IT LI NL SE**

(71) Applicant: **HARLANDS OF HULL LIMITED**
**Land of Green Ginger House Anlaby Hull**
**North Humberside HU10 6RN(GB)**

(72) Inventor: **Kelly, Anthony Richard**
**28 Kenilworth Avenue, Cottingham Road**
**Hull, HU5 4BH(GB)**

(74) Representative: **Whalley, Kevin et al**
**M'CAW & CO. 41-51 Royal Exchange Cross**
**Street**
**Manchester M2 7BD(GB)**

(54) **A card.**

(57) A card (10) is formed from a plastics card sheet (11) which has a laminated sheet (12) adhesively bonded to one side. The laminated sheet is formed from two thin plastics film layers (15, 17) separated by a layer of adhesive (16). The card is supplied mounted on a carrier (19) and held thereon by way of a further layer of adhesive (18). In use, the card (10) is removed from the carrier (19) and is secured to an other surface by way of the adhesive layer (18). Clean removal of the card from the surface can then occur by preferential separation along the interface between the thin film layers (15, 17) due to the nature of the adhesive layer (16).

FIG.1

EP 0 414 538 A2

# A CARD

This invention relates to a card and more particularly to a card which is adapted to be secured to a surface and for subsequent clean-removal therefrom.

It is known for cards or tickets to be attached to the front sheet of promotional literature, magazines or the like. These cards are capable of being removed and are generally used to obtain discounts in retail premises or membership of clubs, etc. The cards are attached to the sheet by the application of a 'spot' of a suitable adhesive to a small part of the card.

However, with this arrangement a problem arises in so far as the card is secured to the sheet over only a small part of its surface, it thus being possible for the corners to lift and therefore the card to be bent or otherwise deformed. A further problem arises upon removal of the card from the sheet, whereupon due to the adhesive, fragments of paper are removed from the sheet and remain attached to the card, leading to the possibility of rendering unreadable part of the information printed thereon.

It is an object of the present invention to provide a card that overcomes the above mentioned problems.

According to a first aspect of the present invention therefore there is provided a card adapted for removable attachment to a surface, said card comprising a card sheet having two opposed sides thereto and a laminated sheet bonded to one side of said card sheet, said laminated sheet including plural overlying layers and being adapted selectively to separate along an interface between two of said layers, said two layers being formed from thin film and said interface comprising a layer of adhesive.

With this arrangement it is possible for a card to be cleanly and efficiently removed from a surface to which it is attached.

Said card sheet may be formed from a plastics material, for example polyvinlychloride (PVC) or alternatively may be formed from card or laminated paper. Said card sheet may be generally rectangular and thus for example may be of a credit-card size.

The laminated sheet may comprise at least one further adhesive layer whereby the sheet may be secured to said card sheet. Said further adhesive layer may alternatively be applied as an extra layer thereto. Preferably the laminated sheet comprises two further adhesive layers, one for attachment as described above and the other for attachment to a suitable mounting. Said mounting may comprise a release paper and more particularly a silicone paper.

Said film layers may be transparent or translucent and may be formed from a plastics film. More particularly one said film layer may comprise a polyester film and the other a polypropylene film.

Said adhesive layer forming the interface may comprise a polymer latex adhesive.

According to a second aspect of the present invention there is provided a method of producing a card comprising the steps of forming a laminated sheet including at least two thin film layers separated by an adhesive layer, bonding said laminated sheet to a continuous sheet of card material, cutting said continuous sheet and laminated sheet to define individual cards in such a manner that at least one layer of said laminated sheet remains and thereby defines a carrier for said cards and removing card material and laminated sheet material existing between the individual cards from said carrier.

The invention will now be described further by way of example only and with reference to the accompanying drawings of which:-

Figure 1 shows a schematic representation of one embodiment of card according to the invention; and

Figure 2 shows a schematic representation of a laminated sheet showing the area of selective separation.

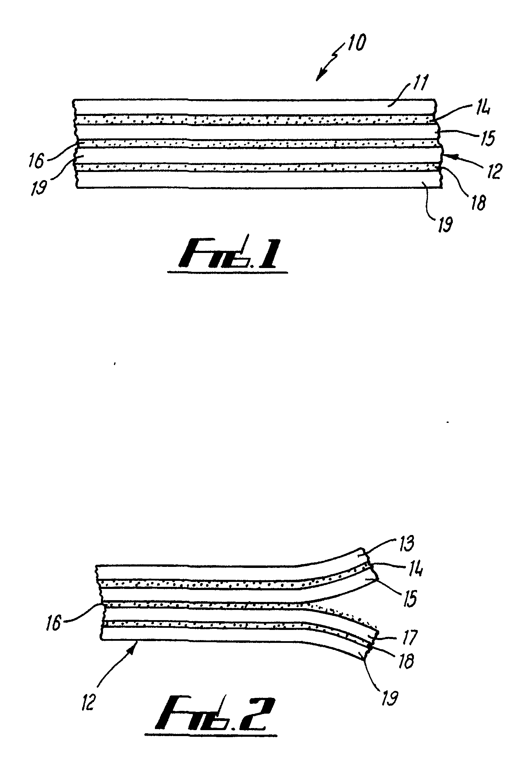

Referring now to the Figures, Figure 1 shows one embodiment of card 10 adapted for clean-removal from a surface (not shown).

The card 10 comprises a card sheet 11 having a laminated sheet 12 securely attached to one side thereof.

The card sheet 11 comprises a generally rectangular sheet formed from polyvinylchloride (PVC). The sheet has printed matter on one or both sides relating to the intended use of the card 10.

The laminated sheet 12, as shown in Figure 2, comprises a multilayer structure having the following layers thereto:-

A first release layer 13 formed from silicone paper, a first adhesive layer 14, a polypropylene film layer 15, a second adhesive layer 16 formed from a polymer latex, a polyester film layer 17, a third adhesive layer 18 and a second release layer 19 formed from silicone paper.

The polypropylene and polyester film layers 15, 17 are at least translucent and preferably are both transparent.

The laminated sheet 12 is formed by coating the respective layers one on top of the other and then pressing the layers together to ensure a secure attachment thereof in a known manner.

The card 10 is formed as follows:-

A continuous sheet of polyvinylchloride is passed through a printing machine where it passes a printing head which applies printed material to one or both sides of the sheet. The printed matter relates to the intended use of the card 10 and thus for example may be promotional or advertising material or the like. The printed sheet then passes through a further machine where the laminated sheet 12 is attached to the printed sheet. In this machine the first release layer 13 is removed from the laminated sheet 12 leaving the first adhesive layer 14 exposed. The first adhesive layer 14 is pressed firmly into contact with one side of the printed sheet and is of such a nature that it forms a permanent bond thereto.

The printed sheet with laminated sheet 12 attached then passes by a die stamp cutter which stamps out the individual rectangular cards 10 of credit-card size. The cutter also removes the laminate 12 between the individual cards with the exception of the second release layer 19. Thus a roll of cards are produced attached by the third adhesive layer 18 to the second release layer 19 which provides a convenient mounting for the cards 10 prior to use.

In use a roll of cards 10 formed as above are supplied to a user with appropriate printed matter thereon. The user removes the individual cards 10 from the release layer 19 and secures them to the front sheet of a promotional leaflet, magazine or the like by way of the exposed third adhesive layer 18. Once attached to the front sheet thereof, the card 10 is retained securely due to the fact that it is attached over its full surface area. The card 10 thus lies flat and is not prone to bending or other damage.

When the leaflet reaches the target customer, such person peels the card 10 off the front sheet. This occurs by the selective separation of the polymer latex adhesive 16 from the polypropylene film 15 and its adherence to the polyester film 17. Thus the card sheet 11 is removed with the first adhesive 14 and clear polypropylene film 15 layers still intact. The third adhesive 18 layer and polyester film layer 17 remain attached to the front sheet of the leaflet.

It will be appreciated that in this way the target customer obtains a card 10 having no exposed adhesive surfaces which he can use for the intended purpose and furthermore removal of the card 10 causes no damage to the printed front sheet of the leaflet.

It is of course to be understood that the invention is not intended to be restricted to the details of the above embodiment which are described by way of example only.

## Claims

1. A card (10) adapted for removable attachment to a surface, said card comprising a card sheet (11) having two opposed sides thereto and a laminated sheet (12) bonded to one side of said card sheet (11), said laminated sheet (12) including plural overlying layers (13-19) and being adapted selectively to separate along an interface between two of said layers (15, 17), said two layers being formed from thin film and said interface comprising a layer (16) of adhesive.

2. A card according to claim 1, characterised in that said card sheet (11) is formed from a plastics material.

3. A card according to claim 2, characterised in that said card sheet (11) is formed from polyvinylchloride (PVC).

4. A card according to any one of claims 1 to 3, characterised in that said card sheet (11) is generally rectangular in configuration.

5. A card according to claim 4, characterised in that said card sheet (11) is of credit card size.

6. A card according to any one of claims 1 to 5, characterised in that the laminated sheet (12) comprises at least one further adhesive layer (14) whereby the sheet can be secured to the card sheet (11).

7. A card according to any one of claims 1 to 5, characterised in that a further adhesive layer (14) is applied as an extra layer to said laminated sheet (12).

8. A card according to any one of claims 1 to 7, characterised in that the laminated sheet (12) comprises two further adhesive layers, one (14) for attachment to said card sheet (11) and the other (18) for attachment to a suitable mounting (19).

9. A card according to claim 8, characterised in that said mounting (19) comprises a release paper.

10. A card according to claim 9, characterised in that said release paper comprises a silicone paper.

11. A card according to any one of claims 1 to 10, characterised in that said film layers (15, 17) are transparent.

12. A card according to any one of claims 1 to 11, characterised in that said film layers (15, 17) are formed from a plastics film.

13. A card according to claim 12, characterised in that one said film layer (17) comprises a polyester film and an other said layer (15) a polypropylene film.

14. A card according to any one of claims 1 to 13, characterised in that said adhesive layer (16) forming the interface comprises a polymer latex adhesive.

15. A method of producing a card (10) comprising the steps of forming a laminated sheet (12) including at least two thin film layers (15, 17) separated by an adhesive layer (10), bonding said laminated sheet (12) to a continuous sheet of card material (11), cutting said continuous sheet (11) and laminated sheet (12) to define individual cards in such a manner that at least one layer (19) of said laminated sheet (12) remains and thereby defines a carrier for said cards and removing card material and laminated sheet material existing between the individual cards from said carrier (19).

_Fig.1_

_Fig.2_